# EUROPÄISCHE PATENTSCHRIFT

(11) **EP 1 969 299 B1**
(45) Veröffentlichungstag und Bekanntmachung des Hinweises auf die Patenterteilung: **23.01.2013**
(21) Anmeldenummer: 06841165.1
(22) Anmeldetag: 23.12.2006
(51) Int. Cl.: F27B 9/20, F27B 9/30, F27B 9/12, F27B 9/39, F27B 9/02, F27B 9/24, C03B 35/16

(54) **VORRICHTUNG FÜR OFENANLAGEN**
APPARATUS FOR FURNACE INSTALLATIONS
DISPOSITIF POUR INSTALLATIONS DE FOUR

(30) Priorität: 06.01.2006 DE 202006000202 U
(43) Veröffentlichungstag der Anmeldung: 17.09.2008
(73) Patentinhaber: Seidel GmbH, 58256 Ennepetal (DE)
(72) Erfinder: SEIDEL, Hans-Joachim, 42369 Wuppertal (DE)
(74) Vertreter: Patentanwälte Buse, Mentzel, Ludewig
(86) Internationale Anmeldenummer: PCT/EP2006/012530
(87) Internationale Veröffentlichungsnummer: WO 2007/076994

(56) Entgegenhaltungen:
- DE-C1- 4 000 106

## Beschreibung

Die Erfindung bezieht sich auf eine Vorrichtung der im Oberbegriff des Anspruches 1 genannten Art. Solche Art Vorrichtungen werden beispielsweise bei der Herstellung von Keramik und Porzellanwaren, aber auch in der Glasindustrie verwendet. Die Ofenanlagen können z.B. zum Brennen, Dekorieren, Entspannen oder Abkühlen der Waren dienen.

Während des Produktionsprozesses kommt es immer wieder dazu, dass Waren defekt sind, oder auch zerbrechen. Dann fallen die zerbrochenen oder abgesplitterten Teile häufig durch die Transporteinrichtung durch bzw. neben der Transporteinrichtung her und landen im Bodenbereich der Ofenanlage. Die Ofenanlage muss daher in regelmäßigen Abständen seitlich geöffnet werden, um die heruntergefallenen Bruchstücke der Waren herauszukratzen bzw. herauszuschlagen. Dies ist äußerst mühsam und kostspielig.

Weiter ist aus DE 40 00 106 C1 die Verwendung von aneinandergereihten Flachtrögen bekannt, die jeweils quer unter der Transportvorrichtung angeordnet sind und die zerbrochene Teile seitlich unter der Glassrollenbahn in bereitstehende Sammelbehältnisse oder Förderanlagen zuführt, was als konstruktiv aufwendig anzusehen ist.

Aufgabe der Erfindung ist es daher, eine Vorrichtung der eingangs beschriebenen Art zu entwickeln, die diese Nachteile vermeidet und ein einfaches Entfernen der heruntergefallenen Bruchteile ermöglicht. Dies wird durch die kennzeichnenden Merkmale des Anspruches 1 erreicht, denen folgende besonderte Bedeutung zukommt.

Unterhalb der Transporteinrichtung ist ein Band vorgesehen, welches herunterfallende Waren aufnimmt und aus der Ofenanlage heraustransportiert. Dies ist eine sehr einfache und kostengünstige Möglichkeit, um die herunterfallenden Waren aus der Ofenanlage zu entfernen. Insbesondere können die defekten Teile auch während des laufenden Produktionsprozesses entfernt werden, da das Band kontinuierlich durch die Ofenanlage fährt und die heruntergefallenen Bruchstücke mitnimmt.

In einer besonders bevorzugten Ausführungsform besteht das Band aus einem Drahtgeflecht oder Drahtgewebe, insbesondere aus Edelstahl. Dies hat den Vorteil, dass das Band hitzebeständig ist und keine Verschmutzungen in den Ofen einträgt, welche sich an den dort zu behandelnden Waren ablagern könnten.

Weitere Vorteile und Ausführungsformen ergeben sich aus den Unteransprüchen, der nachfolgenden Beschreibung und den Zeichnungen. Es zeigen:
- Fig. 1: eine erfindungsgemäße Vorrichtung in Seitenansicht im Schnitt,
- Fig. 2: die erfindungsgemäße Vorrichtung aus Fig. 1 in Vorderansicht.

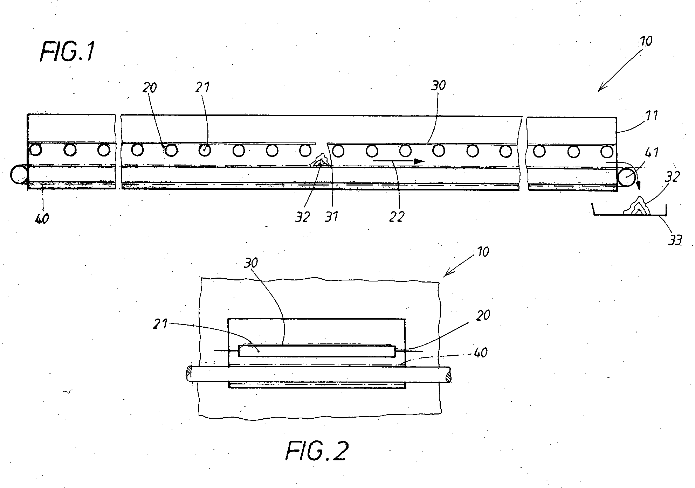

In Fig. 1 ist eine Ausführung der erfindungsgemäßen Vorrichtung dargestellt. In der Ofenanlage 10 ist eine Transporteinrichtung 20 vorgesehen, welche Waren 30 in Laufrichtung 22 durch die Ofenanlage 10 transportiert. Das Band 40 wird in diesem Ausführungsbeispiel über die Antriebsrolle 41 angetrieben. Diese Art des Antriebs ist besonders einfach und kostengünstig und daher sehr vorteilhaft für die vorliegende Anwendung.

In dem hier dargestellten Ausführungsbeispiel besteht die zu transportierende Ware 30 aus Flachglas. Die Transporteinrichtung 20 ist hier als Rollenband 21 ausgebildet. Diese Anordnung ist besonders empfehlenswert, da sich eventuell ergebende Längenänderungen der Ware 30 aufgrund von Erhitzungs- oder Abkühlprozessen durch das Rollenband 21 ausgeglichen werden können.

Ist nun die Ware 30 an einer Stelle defekt 31, so fallen die zerbrochenen oder abgesplitterten Bruchteile 32 durch das Rollenband 21 hindurch. Dort werden sie von dem Band 40 aufgefangen und hierüber aus der Ofenanlage 10 hinaustransportiert. Das Band 40 transportiert die heruntergefallenen Waren 32 in Laufrichtung 22 der Transporteinrichtung 20 aus der Ofenanlage 10 heraus. Dies ist besonders vorteilhaft, wenn es sich bei der Ofenanlage 10 um einen Abkühlofen handelt, da dann die heruntergefallenen Waren 32 mit abgekühlt und nicht weiter durch die Ofenanlage 10 erhitzt werden.

Am einen Ende 11 der Ofenanlage 10 befindet sich ein Auffangbehälter 33, der die vom Band 40 aus der Ofenanlage 10 heraustransportierten, heruntergefallenen Waren 32 auffängt. Somit können die heruntergefallenen Waren 32 besonders einfach der Entsorgung oder dem Recycling zugeführt werden.

Fig. 2 zeigt nun die Ofenanlage 10 aus Fig. 1 in Vorderansicht. Die Ofenanlage 10 ist hier entlang der Ofenisolierung gebrochen dargestellt. Im Inneren der Ofenanlage 10 erkennt man die Transporteinrichtung 20 sowie die auf ihr zu transportierenden Waren 30. Im unteren Bereich der Ofenanlage ist das Band 40 mit der Antriebsrolle 41 dargestellt. Das Band 40 besteht bei diesem bevorzugten Ausführungsbeispiel aus einem Drahtgeflecht aus Edelstahl, wie durch die strichpunktierte Linie angedeutet wird.

Es sei noch darauf hingewiesen, dass die hier dargestellten Ausführungsformen lediglich beispielhafte Verwirklichungen der Erfindung darstellen. Diese ist nicht darauf beschränkt. Es sind vielmehr noch verschiedene Abwandlungen möglich. So kann es sich beispielsweise bei dem Band um ein Gliederband oder um eine Kette handeln. Es kann aus verschiedensten Werkstoffen hergestellt sein. Ebenso kann die Transporteinrichtung auch ein Drahtband oder ein anderes Band sein. Die zu transportierenden Waren können aus anderen Materialien bestehen und auch andere Formen aufweisen, wie beispielsweise Geschirr, Flaschen, Gläser, Vasen, Schalen oder auch industrielle Produkte.

### Bezugszeichenliste:

- 10: Ofenanlage.
- 11: Eines Ende von 10
- 20: Transporteinrichtung
- 21: Rollenband
- 22: Laufrichtung von 20
- 30: Ware
- 31: Defekte Ware
- 32: Heruntergefallene Ware
- 33: Auffangbehälter
- 40: Band
- 41: Antriebsrolle für 40

## Patentansprüche

1. Vorrichtung für Ofenanlagen (10), insbesondere in der Keramik-, Porzellan- oder Glasindustrie,
mit einer Transporteinrichtung (20), auf der Waren (30) durch die Ofenanlage (10) transportiert werden,
wobei defekte und/oder zerbrochene Waren (31) durch die bzw. neben der Transporteinrichtung (20) hinunterfallen,
**dadurch gekennzeichnet,**
**dass** unterhalb der Transporteinrichtung (20) ein Band (40) vorgesehen ist,
welches herunterfallende Ware (32) aufnimmt und aus der Ofenanlage (10) heraus transportiert.

2. Vorrichtung nach Anspruch 1, **dadurch gekennzeichnet, dass** das Band (40) über eine Antriebsrolle (41) angetrieben wird.

3. Vorrichtung nach einem oder mehreren der Ansprüche 1 bis 2, **dadurch gekennzeichnet, dass** das Band (40) aus einem Drahtgeflecht oder Drahtgewebe, insbesondere aus Edelstahl, besteht.

4. Vorrichtung nach einem oder mehreren der Ansprüche 1 bis 3, **dadurch gekennzeichnet, dass** am einen Ende (11) der Ofenanlage (10) ein Auffangbehälter (33) für die heruntergefallenen Waren (32) vorgesehen ist.

5. Vorrichtung nach einem oder mehreren der Ansprüche 1 bis 4, **dadurch gekennzeichnet, dass** die Waren (30) aus Flachglas bestehen.

6. Vorrichtung nach einem oder mehreren der Ansprüche 1 bis 5, **dadurch gekennzeichnet, dass** die Transporteinrichtung (20) aus einem Rollenband (21) besteht.

7. Vorrichtung nach einem oder mehreren der Ansprüche 1 bis 6, **dadurch gekennzeichnet, dass** das Band (40) die Ofenanlage (10) in der gleichen Richtung (22) durchläuft wie die Waren (30).

## Claims

1. Apparatus for furnace installations (10), in particular in the ceramic, porcelain or glass industry,
with a transport device (20) on which goods (30) are conveyed through the furnace installation (10),
whereby defects and/or broken goods (31) fall down through, i.e., beside the transport device (20),
**thereby characterized**
**in that** provided below the transport device (20) is a belt (40),
which accommodates falling goods (32) and conveys them out of the furnace installation (10).

2. Apparatus pursuant to Claim 1, thereby **characterized in that** the belt (40) is driven by means of a drive roll (41).

3. Apparatus pursuant to one or more of the claims 1 to 2, thereby **characterized in that** the belt (40) is made of a wire mesh or wire cloth, in particular of stainless steel.

4. Apparatus pursuant to one or more of the claims 1 to 3, thereby **characterized in that** provided at one end (11) of the furnace installation (10) is a collecting vessel (33) for the fallen goods (32).

5. Apparatus pursuant to one or more of the claims 1 to 4, thereby **characterized in that** the goods (30) are made of plate glass.

6. Apparatus pursuant to one or more of the claims 1 to 5, thereby **characterized in that** the transport device (20) is made of a roller belt (21).

7. Apparatus pursuant to one or more of the claims 1 to 6, thereby **characterized in that** the belt (40) runs through the furnace installation (10) in the same direction (22) as the goods (30).

## Revendications

1. Dispositif pour installations de four (10), en particulier dans l'industrie de la céramique, de la porcelaine ou l'industrie verrière,
présentant un équipement de transport (20) sur lequel des produits (30) sont transportés à travers l'installation de four (10),
sachant que les produits (31) défectueux et/ou cassés tombent à travers ou à côté de l'équipement de transport (20),
**caractérisé en ce que**
en dessous de l'équipement de transport (20) a été prévu un tapis (40),
qui reçoit les produits en train (32) de chuter et les fait sortir de l'installation de four (10).

2. Dispositif selon la revendication 1, **caractérisé en ce que** le tapis (40) est entraîné par un rouleau de traction (41).

3. Dispositif selon l'une ou plusieurs des revendications 1 à 2, **caractérisé en ce que** le tapis (40) se compose d'un treillis filaire ou d'un textile filaire, en particulier en acier inoxydable.

4. Dispositif selon l'une ou plusieurs des revendications 1 à 3, **caractérisé en ce qu'**à une extrémité (11) de l'installation de four (10) a été prévu un récipient (33) réceptionnant les produits (32) qui ont chuté.

5. Dispositif selon l'une ou plusieurs des revendications 1 à 4, **caractérisé en ce que** les produits (30) sont en verre plat.

6. Dispositif selon l'une ou plusieurs des revendications 1 à 5, **caractérisé en ce que** l'équipement de transport (20) se compose d'un tapis à rouleaux (21).

7. Dispositif selon l'une ou plusieurs des revendications 1 à 6, **caractérisé en ce que** le tapis (40) traverse l'installation de four (10) dans le même sens (22) que les produits (30).
